(19) **Europäisches Patentamt / European Patent Office / Office européen des brevets**

(11) **EP 4 606 458 A1**

(12) **EUROPEAN PATENT APPLICATION**
published in accordance with Art. 153(4) EPC

(43) Date of publication:
**27.08.2025 Bulletin 2025/35**

(21) Application number: **23879805.2**

(22) Date of filing: **17.10.2023**

(51) International Patent Classification (IPC):
**B01D 53/14** $^{(2006.01)}$    **B01D 53/18** $^{(2006.01)}$
**C01B 32/50** $^{(2017.01)}$

(52) Cooperative Patent Classification (CPC):
**B01D 53/14; B01D 53/18; C01B 32/50; Y02C 20/40**

(86) International application number:
**PCT/JP2023/037601**

(87) International publication number:
**WO 2024/085162 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.10.2022 JP 2022166997**

(71) Applicant: **Sumitomo Electric Industries, Ltd.**
**Osaka-shi, Osaka 541-0041 (JP)**

(72) Inventors:
• **BABA, Masato**
  **Osaka-shi, Osaka 541-0041 (JP)**
• **MAEDA, Toru**
  **Osaka-shi, Osaka 541-0041 (JP)**
• **HIRAI, Kei**
  **Osaka-shi, Osaka 541-0041 (JP)**

(74) Representative: **Boult Wade Tennant LLP**
**Salisbury Square House**
**8 Salisbury Square**
**London EC4Y 8AP (GB)**

(54) **CARBON DIOXIDE CAPTURING MODULE, SCRUBBER FOR CAPTURING CARBON DIOXIDE, CARBON DIOXIDE CAPTURING DEVICE, AND CARBON DIOXIDE CAPTURING METHOD**

(57)     A carbon dioxide capture module according to an aspect of the present disclosure includes: a carbon dioxide capture material; a solution in contact with the carbon dioxide capture material to cover the carbon dioxide capture material; and a supply unit that supplies carbon dioxide to the solution, and the carbon dioxide capture material contains iron or an iron compound as a main constituent.

FIG.1

EP 4 606 458 A1

**Description**

TECHNICAL FIELD

The present disclosure relates to a carbon dioxide capture module, a carbon-dioxide-capturing scrubber, a carbon dioxide capture device, and a carbon dioxide capture method. The present application claims priority to Japanese Patent Application No. 2022-166997 as an application filed with Japan on October 18, 2022, and all of the contents of the application filed with Japan are incorporated herein.

BACKGROUND ART

Utilization of materials capable of capturing carbon dioxide (hereinafter, also referred to as "carbon dioxide capture materials") has been examined to recover carbon dioxide in industrial facilities, residential spaces, and the like (see PTL 1).

CITATION LIST

PATENT LITERATURE

> PTL 1: Japanese Patent Laying-Open No. 2007-031169
> PTL 2: Japanese Patent Laying-Open No. 2007-075773

SUMMARY OF INVENTION

A carbon dioxide capture module according to an aspect of the present disclosure includes: a carbon dioxide capture material; a solution in contact with the carbon dioxide capture material to cover the carbon dioxide capture material; and a supply unit that supplies carbon dioxide to the solution, and the carbon dioxide capture material contains iron or an iron compound as a main constituent.

BRIEF DESCRIPTION OF DRAWINGS

> Fig. 1 is a schematic perspective view of a carbon dioxide capture module according to an embodiment of the present disclosure and a carbon dioxide capture device including this carbon dioxide capture module.
> Fig. 2 is a schematic line II-II cross-sectional view of the carbon dioxide capture device in Fig. 1.
> Fig. 3 is a schematic cross-sectional view illustrating a variation of supports in the carbon dioxide capture module in Fig. 1.
> Fig. 4 is a schematic cross-sectional view illustrating a variation of supports in the carbon dioxide capture module in Fig. 1, wherein the variation differs from that in Fig. 3.
> Fig. 5 is a schematic perspective view illustrating a carbon dioxide capture module according to a mode of the present disclosure, wherein the mode differs from that in Fig. 1, and a carbon dioxide capture device including this carbon dioxide capture module.
> Fig. 6 is a schematic diagram illustrating a carbon dioxide capture module according to a mode of the present disclosure, wherein the mode differs from those in Fig. 1 and Fig. 5, and a carbon-dioxide-capturing scrubber including this carbon dioxide capture module.
> Fig. 7 is a flowchart illustrating a carbon dioxide capture method according to an embodiment of the present disclosure.

DETAILED DESCRIPTION

[Problems to be Solved by the Present Disclosure]

PTL 1 describes a method in which mechanical impact is applied to a metallic body or the like and water and carbon dioxide are supplied to capture a carbonate. PTL 2 describes a capture method for carbon dioxide to generate a carbonate by bringing metal having a particle size equal to or smaller than a specific size, water, and carbon dioxide into contact. When any of the techniques described in PTL 1 and PTL 2 is used in a common industrial facility, residential space, or the like, however, the metal is likely to be exposed to atmospheric oxygen. Accordingly, the capture efficiency for carbon dioxide may be reduced because of the oxidation or the like of the metal.

The present disclosure has been made in view of that circumstance, and an object of the present disclosure is to provide a carbon dioxide capture module superior in capture efficiency for carbon dioxide.

[Advantageous Effect of the Present Disclosure]

A carbon dioxide capture module according to an aspect of the present disclosure is superior in capture efficiency for carbon dioxide.

[Description of Embodiments]

First, aspects of implementation of the present disclosure are listed for description.

(1) A carbon dioxide capture module according to an aspect of the present disclosure includes: a carbon dioxide capture material; a solution in contact with the carbon dioxide capture material to cover the carbon dioxide capture material; and a supply unit that supplies carbon dioxide to the solution, and the carbon dioxide capture material contains iron or an iron compound as a main constituent.

The carbon dioxide capture module is capable of bringing the solution with carbon dioxide dissolved therein into sufficient contact with the carbon dioxide capture agent to cover the carbon dioxide capture material. At that time, part of the dissolved carbon dioxide changes into carbonate ions or hydrogen carbonate ions (hereinafter, carbonate ions and hydrogen carbonate ions are also referred to as "carbonate ions or the like", collectively). Accordingly, the carbon dioxide capture material can capture carbonate ions or the like dissolved in the solution with ease. With the sufficient contact of the solution with the carbon dioxide capture material, the denaturation of the carbon dioxide capture material because of oxidation or the like is well prevented. Therefore, the carbon dioxide capture module is superior in capture efficiency for carbon dioxide. Under the configuration in which the carbon dioxide capture material contains iron or an iron compound as a main constituent, divalent iron ions are eluted as ions to bond to carbonate ions or the like from the carbon dioxide capture material (in more detail, from the iron or iron compound contained in the carbon dioxide capture material). The sufficient contact of the carbon dioxide capture material with the solution well prevents the divalent iron ions from being oxidized into trivalent iron ions or changing into iron oxide. This allows the carbon dioxide capture material to capture carbonate ions or the like with more ease. More specifically, a divalent iron ion bonds to a carbonate ion or the like to generate iron carbonate or iron hydrogen carbonate (hereinafter, iron carbonate and iron hydrogen carbonate are also referred to as "iron carbonate or the like", collectively). Iron carbonate or the like can attach to the carbon dioxide capture material, or precipitate or suspend in the solution. The term "main constituent" means that the amount of a constituent contained in a material is 50% by mass or more. Iron ions eluted from the iron or iron compound contained in the carbon dioxide capture material are also regarded as constituents of the carbon dioxide capture material.

(2) In (1), the pH of the solution and the electric potential of the carbon dioxide capture material may be controlled to fall within a range in which a divalent iron ion or divalent iron hydroxide is stable in an electric potential-pH diagram. Such a configuration in which the pH of the solution and the electric potential of the carbon dioxide capture material are controlled to fall within a range in which a divalent iron ion or divalent iron hydroxide is stable in an electric potential-pH diagram facilitates the shift of the chemical equilibrium in the solution to increase the proportion of divalent iron ions. Accordingly, more enhanced capture efficiency for carbon dioxide can be achieved. The "electric potential-pH diagram" is an electric potential-pH diagram for iron in the solution at 25°C.

(3) In (1) or (2), the solution may contain a pH-buffering agent. With the configuration in which the solution contains a pH-buffering agent, a state with an increased proportion of divalent iron ions is well maintained in the solution. Accordingly, the capture efficiency for carbon dioxide can be maintained with ease.

(4) In any of (1) to (3), the carbon dioxide capture module may include a solution adjustment mechanism that supplies at least one of an acidic substance, a reducing agent, a sequestering agent, and a builder to the solution. With inclusion of the solution adjustment mechanism, a state with an increased proportion of divalent iron ions is well maintained in the solution. Accordingly, the capture efficiency for carbon dioxide can be maintained with ease.

(5) In any of (1) to (4), the carbon dioxide capture module may include a voltage application mechanism that applies a voltage to the carbon dioxide capture material. With inclusion of the voltage application mechanism, a state with an increased proportion of divalent iron ions is well maintained in the solution. Accordingly, the capture efficiency for carbon dioxide can be maintained with ease.

(6) In any of (1) to (5), the carbon dioxide capture module may include a degassing promotion mechanism that promotes degassing to remove dissolved oxygen in the solution. With inclusion of the degassing promotion mechanism, the oxidative action of dissolved oxygen in the solution is reduced, and a state with an increased proportion of divalent iron ions is well maintained in the solution. Accordingly, the capture efficiency for carbon dioxide can be maintained with ease.

(7) In any of (1) to (6), the solution may contain a carbonation promoter that promotes carbonation of iron ions eluted from the carbon dioxide capture material. The configuration in which the solution contains the carbonation promoter allows the carbon dioxide capture module to have enhanced capture efficiency for carbon dioxide.

(8) In any of (1) to (7), the carbon dioxide capture module may include a dissolution promotion mechanism that promotes dissolution of the carbon dioxide in the solution. Under conditions such as pH at which divalent iron ions can stably exist in the solution, less carbonate ions or the like exist in the solution as a tendency. However, inclusion of the dissolution promotion mechanism allows more carbonate ions or the like to exist in the solution. Accordingly, more enhanced capture efficiency for carbon dioxide can be achieved.

(9) In any of (1) to (8), the solution may contain a dissolution promoter that promotes dissolution of the carbon dioxide in the solution. Under the configuration in which the solution contains the dissolution promoter, a larger amount of carbon dioxide is well provided into the solution. Accordingly, more enhanced capture efficiency for carbon dioxide can be achieved.

(10) In any of (1) to (9), the dissolution rate of the carbon dioxide in the solution may be equal to or lower than the carbonation rate of the carbon dioxide capture material. The configuration in which the dissolution rate of the carbon dioxide in the solution is equal to or lower than the carbonation rate of the carbon dioxide capture material allows the carbon dioxide capture material to more reliably capture carbon dioxide supplied from the supply unit.

(11) **In** any of (1) to (10), the carbon dioxide capture material may include a plurality of carbon dioxide capture materials, and the plurality of carbon dioxide capture materials may have an average particle size of 5 nm or more and 500 $\mu$m or less. The configuration in which the plurality of carbon dioxide capture materials has an average particle size equal to or larger than the lower limit can give a larger contact area between the carbon dioxide capture materials and the solution. The configuration in which the plurality of carbon dioxide capture materials has an average particle size equal to or smaller than the upper limit facilitates the dispersion of the carbon dioxide capture materials. Accordingly, more enhanced capture efficiency for carbon dioxide can be achieved.

(12) In (11), the carbon dioxide capture module may include a dispersion mechanism that disperses the plurality of carbon dioxide capture materials in the solution, and the dispersion mechanism may allow the plurality of carbon dioxide capture materials to keep an average particle size of 5 nm or more and 500 $\mu$m or less. With inclusion of the dispersion mechanism that disperses the plurality of carbon dioxide capture materials in the solution, the carbon dioxide capture materials can be prevented from aggregating and at the same time proper particle sizes for the carbon dioxide capture materials can be maintained with ease.

(13) In any of (1) to (12), the carbon dioxide capture module may include a display mechanism that displays reduction in the activity of the carbon dioxide capture material when the activity of the carbon dioxide capture material has decreased. With inclusion of the display mechanism that displays reduction in the activity of the carbon dioxide capture material, the environment of the solution is well controlled so as to maintain the capture efficiency for carbon dioxide.

(14) In any of (1) to (13), the carbon dioxide capture material may include a plurality of carbon dioxide capture materials, and the carbon dioxide capture module may include a sprinkle mechanism that sprinkles the solution to the plurality of carbon dioxide capture materials. With inclusion of the sprinkle mechanism that sprinkles the solution to the plurality of carbon dioxide capture materials, the solution can be homogeneously brought into contact with the plurality of carbon dioxide capture materials. As a result, enhanced capture efficiency for carbon dioxide is well achieved.

(15) In (14), the carbon dioxide capture module may include an accommodation unit that accommodates the plurality of carbon dioxide capture materials. With inclusion of the accommodation unit that accommodates the plurality of carbon dioxide capture materials, the solution is well supplied in such a manner that the solution homogenously comes into contact with the plurality of carbon dioxide capture materials accommodated at specific positions.

(16) In any of (1) to (15), the carbon dioxide capture module may include a porous support on which the carbon dioxide capture material is disposed. With inclusion of the porous support on which the carbon dioxide capture material is disposed, the carbon dioxide capture material is held well in a stable manner.

(17) In (16), the support may be a porous particle, and the porous particle in a state in which the carbon dioxide capture material is disposed on the porous particle may have an average particle size of 10 mm or less. The configuration in which the porous particle has an average particle size equal to or smaller than the upper limit well allows the carbon dioxide capture material to have enhanced capture efficiency for carbonate ions or the like through homogenization of the entire system. The lower limit of the average particle size of the porous particle may be $1.0 \times 10^{-5}$ mm.

(18) In (16), the support may be a porous thread or a porous sheet, and the carbon dioxide capture material may include a plurality of carbon dioxide capture materials disposed on the support. The configuration in which the support is a porous thread or a porous sheet and the plurality of carbon dioxide capture materials is disposed on the support allows carbonate ions or the like to be brought into contact with the plurality of carbon dioxide capture materials with ease and reliably.

(19) In any of (16) to (18), the support may include a plurality of supports, and the plurality of supports may be disposed apart from each other. The configuration in which the plurality of supports is disposed apart from each other allows the plurality of carbon dioxide capture materials to be easily and stably held in a state that permits the carbon dioxide capture materials to readily come into contact with carbonate ions or the like.

(20) A carbon-dioxide-capturing scrubber according to another aspect of the present disclosure includes: the carbon dioxide capture module according to any of (1) to (19), and the carbon-dioxide-capturing scrubber sprinkles the solution to the carbon dioxide capture material.

Including the carbon dioxide capture module, the carbon-dioxide-capturing scrubber is superior in capture efficiency for carbon dioxide.

(21) A carbon dioxide capture device according to another aspect of the present disclosure includes: the carbon dioxide capture module according to any of (1) to (19); and a storage tank in which the solution is stored, and the carbon dioxide capture material is soaked in the solution.

Including the carbon dioxide capture module with the carbon dioxide capture material soaked in the solution, the carbon dioxide capture device is superior in capture efficiency for carbon dioxide.

(22) A carbon dioxide capture method according to another aspect of the present disclosure includes bringing a carbonate ion or a hydrogen carbonate ion into contact with a carbon dioxide capture material covered by a solution, and the carbon dioxide capture material contains iron or an iron compound as a main constituent.

Because the solution comes into sufficient contact with the carbon dioxide capture material to cover the carbon dioxide capture material in the carbon dioxide capture method, the carbon dioxide capture material can capture carbonate ions or the like dissolved in the solution with ease. With the sufficient contact of the solution with the carbon dioxide capture material, the denaturation of the carbon dioxide capture material because of oxidation or the like is well prevented. Accordingly, the carbon dioxide capture method gives superior capture efficiency for carbon dioxide. Containing iron or an iron compound as a main constituent, the carbon dioxide capture material can capture carbonate ions or the like with more ease.

In the present disclosure, the specification "the solution in contact with the carbon dioxide capture material to cover the carbon dioxide capture material" requires achievement of a state in which the carbon dioxide capture material is covered with the solution, without limitation to a configuration in which the carbon dioxide capture material is always covered with the solution. It is only required that a state in which the carbon dioxide capture material is partially covered with the solution is achieved, without limitation to a configuration in which the whole of the carbon dioxide capture material is covered with the solution. The carbon dioxide capture material may be in contact with a member to transmit the solution such as a cloth, and may be provided to be covered by the solution transmitted through the member. The form of carbon dioxide that "the supply unit" supplies is not limited to gas, and carbon dioxide in a state of being dissolved in the solution is also acceptable. That is, the supply unit may supply carbon dioxide, for example, in the form of carbonate ions or hydrogen carbonate ions. The term "particle size" refers to the particle size of a secondary particle. If a secondary particle is not formed, the term refers to the particle size of a primary particle. The term "average particle size" refers to a median diameter at which volume-based cumulative size distribution calculated in accordance with JIS-Z-8819-2:2001 (D50) reaches 50%.

[Detailed Description of Embodiments]

Hereinafter, modes of implementation of the present disclosure are described in detail with reference to drawings as appropriate. In the following description, a carbon dioxide capture material is occasionally simply referred to as a capture material, a carbon dioxide capture module simply as a capture module, a carbon-dioxide-capturing scrubber simply as a capturing scrubber, a carbon dioxide capture device simply as a capture device, and a carbon dioxide capture unit simply as a capture unit.

[First Embodiment]

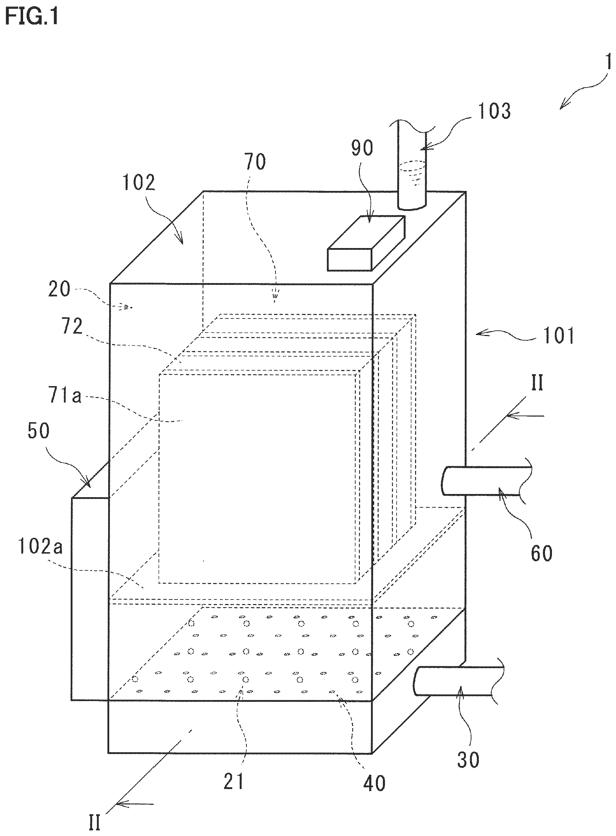

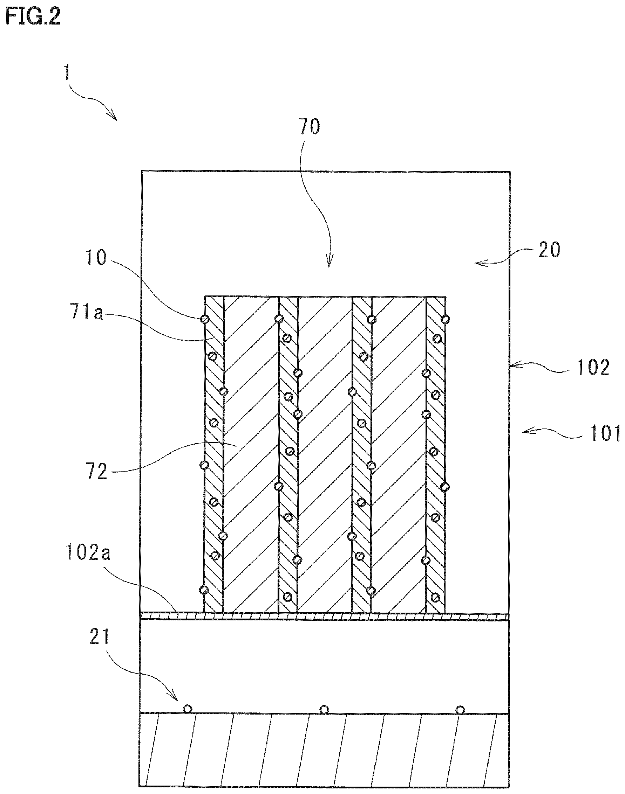

A carbon dioxide capture module 101 in Fig. 1 and Fig. 2 includes: carbon dioxide capture materials 10; a solution 20 in contact with carbon dioxide capture materials 10 to cover carbon dioxide capture materials 10; and a supply unit 30 that supplies carbon dioxide to solution 20. As illustrated in Fig. 1 and Fig. 2, capture module 101 is disposed in a carbon dioxide capture device 1.

Capture materials 10, solution 20, and supply unit 30 of capture module 101 are disposed in a container. More specifically, capture materials 10 and solution 20 are accommodated in a container, and supply unit 30 is provided in such a manner that supply unit 30 can supply carbon dioxide into the container. An example of the container is a storage tank 102 described later. Carbon dioxide supplied by supply unit 30 to solution 20 dissolves in solution 20. The carbon dioxide that has dissolved in solution 20 is captured by capture materials 10.

Capture module 101 is capable of bringing solution 20 with carbon dioxide dissolved therein into sufficient contact with capture materials 10 to cover capture materials 10. At that time, part of the dissolved carbon dioxide changes into carbonate ions or the like. Accordingly, capture materials 10 can capture carbonate ions or the like dissolved in solution 20 with ease. With the sufficient contact of solution 20 with capture materials 10, the denaturation of capture materials 10 because of oxidation or the like is well prevented. Thus, capture module 101 is superior in capture efficiency for carbon dioxide.

Capture module 101 and capture device 1 are used for capturing or recovering carbon dioxide, for example, in a production facility, a residential space, or an office. The sizes of capture module 101 and capture device 1 are appropriately set to fit the place and purpose of use. The following describes capture module 101 and capture device 1 including capture module 101 in detail.

<Carbon Dioxide Capture Module>

Capture module 101 captures carbonate ions or the like generated in solution 20 with capture materials 10 by bringing solution 20 with carbon dioxide dissolved therein into sufficient contact with capture materials 10 to cover capture materials 10. Capture module 101 includes: a dissolution promotion mechanism 40 that promotes dissolution of carbon dioxide in solution 20; a dispersion mechanism 50 that disperses the plurality of capture materials 10 in solution 20; a solution adjustment mechanism 60 that supplies at least one of an acidic substance, a reducing agent, a sequestering agent, and a builder to solution 20; a display mechanism 90 that displays reduction in the activity of capture materials 10; and porous supports 71a on which capture materials 10 are disposed.

(Carbon Dioxide Capture Materials)

Capture materials 10 are particulate, more specifically, powdery. Capture materials 10 each contain iron or an iron compound as a main constituent. Examples of capture materials 10 containing iron as a main constituent include iron and iron alloy. The iron alloy may be metal containing, for example, a manganese element, a chromium element, a molybdenum element, an aluminum element, a copper element, a zinc element, and a nickel element in addition to an iron element. Examples of the iron compound include iron(II) hydroxide and iron(II) hexacyanoferrate(II). Each containing iron and an iron compound as a main constituent, capture materials 10 can capture carbonate ions or the like in solution 20 with more ease. Capture module 101 may have only one of the iron, iron alloy, and iron compound described above, or have two or more thereof as capture materials 10.

Under the configuration in which capture materials 10 each contain iron or an iron compound as a main constituent, divalent iron ions are eluted into solution 20, and react with carbonate ions or the like in solution 20 as shown by a formula (1) or formula (2) given below. Even when divalent iron ions eluted from capture materials 10 generate iron(II) hydroxide, ionized divalent iron ions react with carbonate ions or the like in solution 20 as shown by formula (1) or formula (2) given below. In formula (1) and formula (2) in the following, aq indicates a hydrated state.

$$Fe^{2+} (aq) + CO_3^{2-} (aq) = FeCO_3 (aq) \cdots (1)$$

$$Fe^{2+} (aq) + 2HCO_3^- (aq) = Fe(HCO_3)_2 (aq) \cdots (2)$$

In the present embodiment, capture materials 10 are capable of capturing carbonate ions or the like in solution 20 by generating iron carbonate or iron hydrogen carbonate. Carbon dioxide that capture materials 10 have captured can be recovered, for example, by washing capture materials 10 or filtering solution 20.

In the case that capture materials 10 are each iron alloy, the lower limit of the amount of an iron element contained in the iron alloy may be 50% by mass, 60% by mass, or 70% by mass for ensuring the amount of iron ions eluted into solution 20. The upper limit of the amount of an iron element contained in the iron alloy can be, for example, 99.99% by mass. In the case that capture materials 10 each contain an iron compound as a main constituent, the lower limit of the amount of the iron compound contained in each capture material 10 may be 50% by mass, 60% by mass, or 70% by mass for ensuring the amount of iron ions eluted into solution 20. The upper limit of the amount of the iron compound contained in each capture material 10 can be, for example, 99.99% by mass.

The lower limit of the average particle size of the plurality of capture materials 10 may be 5 nm, 10 nm, or 15 nm for giving a larger contact area between capture materials 10 and solution 20. The upper limit of the average particle size may be 500 $\mu$m, 200 $\mu$m, or 100 $\mu$m for easiness in dispersing capture materials 10. The average particle size may be 5 nm or more and 500 $\mu$m or less, 10 nm or more and 200 $\mu$m or less, or 15 nm or more and 100 $\mu$m or less.

(Supports)

On each support 71a, a plurality of capture materials 10 is disposed. The configuration in which capture module 101 includes supports 71a allows capture materials 10 to be stably held. Under this configuration, when carbon dioxide attaches as iron carbonate to capture materials 10, the iron carbonate can be recovered and washed with ease.

In Fig. 1 and Fig. 2, each support 71a is a porous sheet. In Fig. 1 and Fig. 2, a plurality of capture materials 10 is disposed on one porous sheet. The configuration in which each support 71a is a porous sheet allows carbonate ions or the like to be brought into contact with capture materials 10 with ease and reliably. A plurality of capture materials 10 is disposed apart from each other on one porous sheet. The configuration in which each support 71a is a porous sheet allows a plurality of capture materials 10 to be disposed apart from each other with ease. As a result, the aggregation of capture materials 10 is prevented, and the capture effect of capture materials 10 for carbonate ions or the like is well enhanced.

Examples of supports 71a include cellulose fiber sheets such as cloths, nonwoven fabric sheets, fabric sheets, sponge sheets, and Japanese paper sheets; carbon fiber sheets; ceramic fiber sheets such as those made of alumina; and metal fiber sheets such as those made of copper and those made of stainless steel. Supports 71a may be those subjected to surface treatment such as gold plating and resin coating to prevent denaturation and erosion to be caused by solution 20 described later.

Capture materials 10 may be disposed on the surface of each support 71a, or on the inside of each support 71a. Capture materials 10 may be supported on the surface or pore parts of each support 71a with use of support 71a as a carrier.

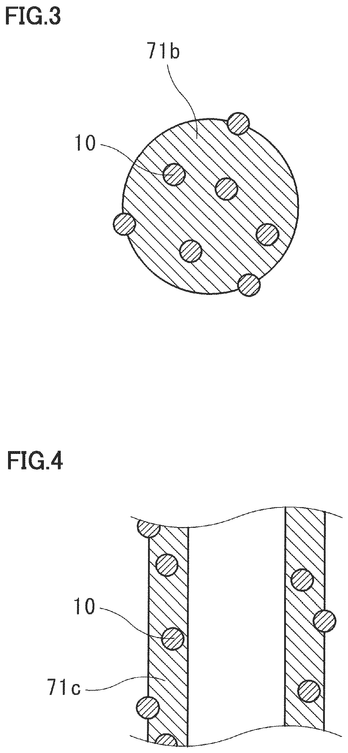

Each support is not limited to a porous sheet, and may be, for example, a porous particle or a porous thread. With reference to Fig. 3 and Fig. 4, the configuration in which capture materials 10 are disposed on a porous particle or a porous thread will be described in the following. Also in the case that capture materials 10 are disposed on a porous particle or a porous thread, capture materials 10 may be disposed on the surface of each support 71b or 71c, or on the inside of each support 71b or 71c. Capture materials 10 may be supported on the surface or pore parts of each support 71b or 71c with use of support 71b or 71c as a carrier.

Support 71b in Fig. 3 is a porous particle. In Fig. 3, a plurality of capture materials 10 is disposed on one porous particle. More specifically, a plurality of capture materials 10 is disposed apart from each other on one porous particle. With this disposition, the aggregation of capture materials 10 is prevented, and the capture effect of capture materials 10 for carbonate ions or the like is well enhanced.

Examples of the porous particle include silica gel, water-absorbing polymer, activated carbon particles, porous glass, and porous metal particles. The porous particles may be those subjected to surface treatment such as gold plating and resin coating to prevent denaturation and erosion to be caused by solution 20 described later. The lower limit of the average particle size of the porous particles may be twice, five times, or 10 times the average particle size of capture materials 10 for easiness in disposing capture materials 10. The lower limit of the average particle size of the porous particles may be $1.0 \times 10^{-5}$ mm, $2.5 \times 10^{-5}$ mm, or $5.0 \times 10^{-4}$ mm. The upper limit of the average particle size of the porous particles may be 10 mm for well allowing capture materials 10 to have enhanced capture efficiency for carbonate ions or the like through homogenization of the entire system. The upper limit of the average particle size of the porous particles may be 200 times, 100 times, or 50 times the average particle size of capture materials 10. The average particle size of the porous particles may be twice or more and 200 times or less, five times or more and 100 times or less, or 10 times or more and 50 times or less the average particle size of capture materials 10. The average particle size of the porous particles may be $1.0 \times 10^{-5}$ mm or more and 10 mm or less, $2.5 \times 10^{-5}$ mm or more and 10 mm or less, or $5.0 \times 10^{-4}$ mm or more and 10 mm or less.

Each support 71c in Fig. 4 is a porous thread. In Fig. 4, a plurality of capture materials 10 is disposed on one porous thread. The configuration in which each support 71c is a porous thread allows carbonate ions or the like to be brought into contact with a plurality of capture materials 10 with ease and reliably. A plurality of capture materials 10 is disposed apart from each other on one porous thread. The configuration in which each support 71c is a porous thread allows a plurality of capture materials 10 to be disposed apart from each other with ease. As a result, the aggregation of capture materials 10 is prevented, and the capture effect of capture materials 10 for carbonate ions or the like is well enhanced.

Each porous thread is not limited as long as the porous thread has many pores; for example, a follow fiber membrane having a fiber-like skeleton can be used.

The lower limit of the average pore sizes of supports 71a, 71b, and 71c may be equal to, three times, five times, or 10 times the average particle size of capture materials 10 for ensuring gas permeability or for allowing capture materials 10 to be supported with ease. The upper limit of the average pore sizes of supports 71a, 71b, and 71c is not limited, and, for example, may be 100 times the average particle size of capture materials 10. The "average pore sizes" are calculated from BET specific surface area and pore volume determined with a gas adsorption method in accordance with JIS-Z-8830-2:2013.

The number of supports in capture module 101 is not limited, and may be one, or two or more. In the case that capture module 101 has a plurality of supports, the supports may be each any one of a porous sheet, a porous particle, and a porous thread, and two or more of a porous sheet, a porous particle, and a porous thread may be used in combination.

In the case that capture module 101 has a plurality of supports, the plurality of supports may be disposed apart from each other. This configuration allows the plurality of capture materials 10 to be easily and stably held in a state that permits capture materials 10 to readily come into contact with carbonate ions or the like.

In the case that a plurality of supports 71a is disposed apart from each other as illustrated in Fig. 1 and Fig. 2, these supports 71a may be disposed with a spacer 72 sandwiched between each two. In Fig. 1 and Fig. 2, a plurality of supports 71a is disposed alternately with spacers 72 in the thickness direction. The plurality of supports 71a is disposed alternately with spacers 72 with the sheet surfaces of each support 71a being in contact with spacers 72. The plurality of supports 71a may be fixed to spacers 72. In capture module 101, the plurality of capture materials 10, the plurality of supports 71a, and the plurality of spacers 72 as a whole constitute a capture unit 70.

Each spacer 72 is, for example, plate-like. Spacers 72 are disposed alternately with supports 71a with the plate surfaces of each spacer 72 being in contact with supports 71a. Each spacer 72 is a porous body. Spacers 72, each being a porous body, constitute passages for carbonate ions or the like to reach capture materials 10. Examples of spacers 72 include mesh bodies and sponge bodies. Each spacer 72 is not limited to being plate-like, and may be a rod-like member or the like to be in contact with only a part of support 71a. The configuration in which capture module 101 includes spacers 72 allows the plurality of supports 71a to be disposed apart from each other at high density.

(Supply Unit)

Supply unit 30 supplies a gas containing carbon dioxide to solution 20. Supply unit 30 supplies carbon dioxide to solution 20 by supplying a gas containing carbon dioxide to storage tank 102, which is described later, in which solution 20 is stored. Supply unit 30 includes a supply pipe capable of supplying carbon dioxide, for example, from a lower part of storage tank 102 into storage tank 102.

(Solution)

Solution 20 is always covering the plurality of capture materials 10. In capture module 101, the plurality of capture materials 10 is soaked in solution 20, and more specifically capture unit 70 is soaked in solution 20.

The pH of solution 20 and the electric potential of each capture material 10 may be controlled to fall within a range in which divalent iron ions or divalent iron hydroxide is stable in the electric potential-pH diagram. The pH of solution 20 and the electric potential of each capture material 10 may be controlled to increase the amount of divalent iron ions or divalent iron hydroxide contained in solution 20. The pH of solution 20 and the electric potential of each capture material 10 may be controlled to fall within a range in which divalent iron ions are stable in the electric potential-pH diagram for generating iron carbonate or the like as represented by formula (1) or formula (2) with more ease. Examples of methods for controlling the pH of solution 20 include a pH-buffering material described later and a salt that exhibits acidity in solution 20. An example of a method for controlling the electric potential of each capture material 10 is applying a voltage to capture materials 10. An example of means for measuring the pH of solution 20 is display mechanism 90 described later, and an example of means for measuring the electric potential of each capture material 10 is an ORP meter.

The range in which divalent iron ions are stable in the electric potential-pH diagram is such a range that the pH of solution 20 satisfies -2 or more and 9.5 or less and the electric potential (E (V vs. SHE)) of capture material 10 satisfies the following formula (3), the following formula (4), and the following formula (5):

$$E < -0.218pH + 1.67 \ (4 \le pH \le 9.5) \cdots (3)$$

$$E < 0.8 \ (-2 \le pH \le 4) \cdots (4)$$

$$E > -0.6 \ (-2 \le pH \le 9.5) \cdots (5)$$

The range in which divalent iron hydroxide is stable in the electric potential-pH diagram is such a range that the pH of solution 20 satisfies 9.5 or more and 16 or less and the electric potential (E (V vs. SHE)) of capture material 10 satisfies the following formula (6) and the following formula (7):

$$E < -0.0615pH + 0.285 \cdots (6)$$

$$E > -0.0615pH - 0.0154 \cdots (7)$$

The upper limit of the pH of solution 20 may be 6.0, 5.0, 4.0, 3.0, 2.5, 2.0, or 1.5 for increasing the amount of divalent iron ions in solution 20 with ease. The lower limit of the pH of solution 20 is not limited, and may be, for example, 0.0.

It is acceptable, for example, for the purpose of suspending use of capture module 101 and recovering a compound dissolved in solution 20 (e.g., carbonate ions or the like) to temporarily control the electric potential of each capture material 10 and the pH of solution 20 to fall out of a range in which divalent iron ions or divalent iron hydroxide is stable in the electric potential-pH diagram, or to temporarily control the pH of solution 20 to fall out of the range of the pH of solution 20.

Solution 20 contains water as a solvent. Solution 20 may contain a dissolution promoter that promotes the dissolution of carbon dioxide in solution 20, may contain a pH-buffering material, may contain a salt that exhibits acidity in solution 20 to lower the pH of solution 20, and may contain a carbonation promoter 21 that promotes the carbonation of iron ions eluted from capture materials 10.

A gas containing carbon dioxide is supplied from supply unit 30 to solution 20. In solution 20, chemical equilibrium represented by a formula (8) shown below and a formula (9) shown below occurs, and carbonate ions ($CO_3^{2-}$) or hydrogen carbonate ions ($HCO_3^-$) are generated. In the following formula (8) and the following formula (9), aq indicates a hydrated state:

$$CO_2\,(aq) = H^+\,(aq) + HCO_3^-\,(aq) \cdots (8)$$

$$HCO_3^-\,(aq) = H^+\,(aq) + CO_3^{2-}\,(aq) \cdots (9)$$

[Dissolution Promoter]

An example of the dissolution promoter is carbonic anhydrase. The carbonic anhydrase promotes the generation of hydrogen carbonate ions ($HCO_3^-$) in formula (8). Under the configuration in which solution 20 contains a dissolution promoter, the amount of carbonate ions or the like in solution 20 is well increased. Accordingly, more enhanced capture efficiency for carbon dioxide can be achieved.

[pH-buffering Agent]

The pH-buffering agent (buffer) makes it easier to keep the pH of solution 20 at a desired value. Examples of the pH-buffering material include sodium tartrate, sodium acetate, sodium borate, sodium citrate, ammonium chloride, and sodium phosphate. Under the configuration in which solution 20 contains a pH-buffering agent, a state in which a larger amount of divalent iron ions or divalent iron hydroxide is present in solution 20 is well maintained. Accordingly, the capture efficiency for carbon dioxide can be maintained with ease.

[Salt]

Examples of the salt that exhibits acidity in solution 20, specifically, the salt that dissolves in solution 20 and exhibits acidity, include sodium hydrogen sulfate, ammonium hydrogen sulfate, sodium dihydrogen phosphate, iron(II) sulfate, and iron(II) chloride. Under the configuration in which solution 20 contains the salt, the pH of solution 20 can be lowered with ease. Accordingly, divalent iron ions are well eluted from capture materials 10 into solution 20. That is, capture materials 10 well keep the activity to capture carbonate ions or the like.

[Carbonation Promoter]

In the present embodiment, carbonation promoter 21 is particulate. Carbonation promoter 21 contains iron carbonate or iron hydrogen carbonate as a main constituent. Carbonation promoter 21 can serve as a seed crystal for the carbonation of iron ions. The growth of a crystal of iron carbonate or the like on carbonation promoter 21 as a seed crystal promotes the capture of carbonate ions or the like by iron ions eluted from capture materials 10. By serving as a seed crystal, carbonation promoter 21 can prevent capture materials 10 from being coated with iron carbonate or the like and prevent the resulting reduction in the activity of capture materials 10.

Carbonation promoter 21 may be disposed apart from capture materials 10. The configuration in which carbonation promoter 21 is disposed in such a manner enables easy recovery of iron carbonate or the like formed on carbonation promoter 21 as a seed crystal. In the case that capture materials 10 are not coated with iron carbonate or the like, iron carbonate or the like formed on carbonation promoter 21 as a seed crystal can be selectively recovered without recovering capture materials 10.

In the present embodiment, as illustrated in Fig. 1, carbonation promoters 21 are disposed apart from capture materials 10 and supports 71a with a porous membrane 102a that is provided in storage tank 102 described later intervening therebetween. The configuration in which carbonation promoters 21 are disposed with porous membrane 102a intervening allows carbonation promoters 21 and capture materials 10 to keep an interval therebetween. Porous membrane 102a may be configured to prevent iron carbonate or the like from passing therethrough and allow carbonate ions or the like to pass therethrough. Thereby, the reduction in the activity of capture materials 10 is more reduced, and at the same time the supply of carbonate ions or the like to capture materials 10 is well promoted.

(Dissolution Promotion Mechanism)

Dissolution promotion mechanism 40 promotes the dissolution of carbon dioxide in solution 20. Under the configuration in which capture module 101 includes dissolution promotion mechanism 40, a larger amount of carbon dioxide is well provided into solution 20. Accordingly, more enhanced capture efficiency for carbon dioxide can be achieved.

Examples of dissolution promotion mechanism 40 include a bubble generator (bubbling device) capable of generating fine bubbles such as nanobubbles and microbubbles in solution 20, an ultrasonic generator capable of generating cavitation bubbles in solution 20, and a temperature-pressure controller capable of lowering the temperature of solution 20 and increasing the partial pressure of carbon dioxide.

In Fig. 1 and Fig. 2, a bubble generator is included as dissolution promotion mechanism 40. The bubble generator is disposed in a flow channel going from supply unit 30 to storage tank 102. The bubble generator generates fine bubbles from a gas containing carbon dioxide and supplies them to solution 20.

The upper limit of the bubble diameter of fine bubbles may be 1.0 $\mu$m, 0.8 $\mu$m, or 0.6 $\mu$m for giving a larger contact area between carbon dioxide and solution 20 as a whole of capture module 101. The lower limit of the bubble diameter is not limited, and can be, for example, 0.005 $\mu$m. The bubble diameter may be 0.005 $\mu$m or more and 1.0 $\mu$m or less, 0.005 $\mu$m or more and 0.8 $\mu$m or less, or 0.005 $\mu$m or more and 0.6 $\mu$m or less. The "bubble diameter" refers to the diameter when the bubble is exhaled from the bubble generator.

The lower limit of the partial pressure of carbon dioxide in a gas to be supplied from supply unit 30 into storage tank 102 may be $4.0 \times 10^{-5}$ MPa, $6.0 \times 10^{-5}$ MPa, or $8.0 \times 10^{-5}$ MPa for enhancing the capture efficiency of capture materials 10 for carbonate ions or the like. The upper limit of the partial pressure is not limited, and can be, for example, $1.0 \times 10^{-1}$ MPa. The partial pressure may be $4.0 \times 10^{-5}$ MPa or more and $1.0 \times 10^{-1}$ MPa or less, $6.0 \times 10^{-5}$ MPa or more and $1.0 \times 10^{-1}$ MPa or less, or $8.0 \times 10^{-5}$ MPa or more and $1.0 \times 10^{-1}$ MPa or less. In the case that dissolution promotion mechanism 40 is a temperature-pressure controller, dissolution promotion mechanism 40 may control the partial pressure of carbon dioxide to fall within that range.

In the case that dissolution promotion mechanism 40 is a temperature-pressure controller, the upper limit of the temperature of solution 20 to be controlled by dissolution promotion mechanism 40 may be 99°C or 95°C for easy handling of solution 20. The lower limit of the temperature may be 25°C, 50°C, 70°C, or 90°C for enhancing the capture efficiency of capture materials 10 for carbonate ions or the like. The temperature may be 25°C or more and 99°C or less, 50°C or more and 99°C or less, 70°C or more and 99°C or less, 90°C or more and 99°C or less, or 90°C or more and 95°C or less.

(Dispersion Mechanism)

Dispersion mechanism 50 disperses the plurality of capture materials 10 in solution 20. Dispersion mechanism 50 maintains the average particle size of the plurality of capture materials 10. The lower limit of the average particle size of the plurality of capture materials 10 to be maintained by dispersion mechanism 50 may be 5 nm, 10 nm, or 15 nm. The upper limit of the average particle size of the plurality of capture materials 10 to be maintained by dispersion mechanism 50 may be 500 $\mu$m, 200 $\mu$m, or 100 $\mu$m. The average particle size may be 5 nm or more and 500 $\mu$m or less, 10 nm or more and 200 $\mu$m or less, or 15 nm or more and 100 $\mu$m or less. Under the configuration in which capture module 101 includes dispersion mechanism 50, capture materials 10 can be prevented from aggregating and at the same time proper particle sizes for capture materials 10 can be maintained with ease.

Dispersion mechanism 50 functions in a particularly effective manner in the case that the plurality of capture materials 10 is prone to aggregate. In the case that the plurality of capture materials 10 are not disposed on supports 71a, 71b, or 71c, for example, the aggregation of capture materials 10 can temporarily occur. In this case, proper particle sizes for capture materials 10 can be maintained with ease by dispersing the plurality of capture materials 10 by dispersion mechanism 50 in supplying carbon dioxide to solution 20. In the case that capture materials 10 are disposed on porous particles, with inclusion of dispersion mechanism 50, proper particle sizes for the porous particles can be maintained with ease by dispersing the porous particles in solution 20. The configuration in which capture module 101 includes dispersion mechanism 50 enables the entire system including solution 20 to be homogenized so that capture materials 10 can capture carbon dioxide well.

As dispersion mechanism 50, one that generates a flow in solution 20 can be used, and an ultrasonic generator, a stirrer, or the like can be used (in Fig. 1, an ultrasonic generator is shown). Alternatively, a device that attracts, fractionates, and fixes (fixes at specific positions) capture materials 10 by magnetic power can be used as dispersion mechanism 50. An example of such a device is a magnetic separator.

(Solution Adjustment Mechanism)

Solution adjustment mechanism 60 supplies, for example, an acidic substance to solution 20 when the pH of solution 20 has increased. Examples of the acidic substance include the salt described above and a solution with the salt dissolved therein. The upper limit of the pH of solution 20 at which solution adjustment mechanism 60 starts supply of an acidic substance may be 6.0, 5.0, 4.0, or 3.0. With solution adjustment mechanism 60, a state in which a larger amount of divalent iron ions is present in solution 20 is well maintained. Accordingly, the capture efficiency for carbon dioxide can be maintained with more ease. Solution adjustment mechanism 60 may control start and end of supply of an acidic substance on the basis of a display given by display mechanism 90 described later.

Solution adjustment mechanism 60 may supply at least one of a reducing agent, a sequestering agent, and a builder in order to prevent the oxidation of divalent iron ions in solution 20. Examples of the reducing agent include polyphenols such as catechin and chlorogenic acid. Examples of the sequestering agent include citric acid and gluconic acid. The builder may be one that is used as an auxiliary agent for washing. Examples of the builder include carbonates, silicates, aluminosilicates, sulfates, and carboxymethylcellulose (CMC).

(Display Mechanism)

Display mechanism 90 displays reduction in the activity of capture materials 10 when the activity of capture materials 10 has decreased. Under the configuration in which capture module 101 includes display mechanism 90, the environment of solution 20 is well controlled to maintain the capture efficiency for carbon dioxide.

In capture module 101, the pH of solution 20 correlates with the activity of capture materials 10. If the pH has increased to 4 or more, for example, the activity of capture materials 10 may have decreased through reduction in the amount of divalent iron ions eluted from capture materials 10. Display mechanism 90 may include a pH indicator, and may include a pH meter. More specifically, display mechanism 90 may include a pH indicator to be supplied to solution 20, and may include a pH meter capable of measuring the pH of solution 20. Reduction in the activity of capture materials 10 can be displayed by displaying the pH of solution 20 with the pH indicator or pH meter.

[pH Indicator]

As the pH indicator, one capable of indicating reduction in the activity of capture materials 10 can be used, and examples thereof include thymol blue, methyl orange, methyl red, bromocresol purple, bromothymol blue (BTB), phenol red, and neutral red.

In capture module 101, the dissolution rate of carbon dioxide in solution 20 may be equal to or lower than the carbonation rate of capture materials 10. Such a configuration allows capture materials 10 to capture carbon dioxide supplied from supply unit 30 more reliably. In this regard, the upper limit of the ratio of the amount [ppm] of carbon dioxide contained in a gas to be released from solution 20 (more specifically, a gas to be discharged from a degassing promotion mechanism 103 described later) to the amount [ppm] of carbon dioxide contained in a gas to be supplied from supply unit 30 may be 0.8, 0.6, or 0.4. The lower limit of the ratio is not limited, and can be, for example, 0.1. The ratio may be 0.1 or more and 0.8 or less, 0.1 or more and 0.6 or less, or 0.1 or more and 0.4 or less.

<Carbon Dioxide Capture Device>

Capture device 1 includes: capture module 101; and storage tank 102 in which solution 20 is stored. Capture device 1 includes degassing promotion mechanism 103 that discharges a gas released from solution 20. In capture device 1, capture materials 10 are soaked in solution 20.

Including capture module 101 with capture materials 10 soaked in solution 20, capture device 1 is superior in capture efficiency for carbon dioxide.

(Storage Tank)

The shape of storage tank 102 is appropriately set to fit the shape of capture module 101. Storage tank 102, with solution 20 stored therein, is provided so that the whole of capture unit 70 can be soaked in solution 20. In the present embodiment, storage tank 102 includes porous membrane 102a to dispose carbonation promoters 21 apart from capture materials 10 and supports 71a (capture unit 70).

[Porous Membrane]

For example, as illustrated in Fig. 1, porous membrane 102a vertically separates carbonation promoters 21 from capture materials 10 and supports 71a in storage tank 102. Carbonation promoters 21 may be disposed on the side below porous membrane 102a with capture materials 10 and supports 71a disposed on the side above porous membrane 102a. The separation of carbonation promoters 21 from capture materials 10 and supports 71a by porous membrane 102a enables easy recovery of iron carbonate or the like formed on carbonation promoters 21 as seed crystals.

Porous membrane 102a may be configured to prevent iron carbonate or the like from passing therethrough and allow carbonate ions or the like to pass therethrough. The configuration in which porous membrane 102a prevents iron carbonate or the like from passing therethrough can prevent iron carbonate or the like formed on carbonation promoters 21 as seed crystals from coating capture materials 10, and hence the reduction in the activity of capture materials 10 can be more reduced. The configuration in which porous membrane 102a allows carbonate ions or the like to pass therethrough well promotes supply of carbonate ions or the like to capture materials 10.

The lower limit of the average pore size of porous membrane 102a may be 0.38 nm, 0.50 nm, or 1.00 nm for allowing carbonate ions or the like to pass therethrough. The upper limit of the average pore size may be 20 nm, 15 nm, or 10 nm for preventing iron carbonate or the like from passing therethrough.

(Degassing Promotion Mechanism)

Degassing promotion mechanism 103 is disposed in an upper part of storage tank 102. Degassing promotion mechanism 103 discharges a gas that has risen up in solution 20 and been released from the liquid surface of solution 20 to the outside of capture device 1. Degassing promotion mechanism 103 discharges the gas to the outside of capture device 1 so that the pressure of the gas in contact with solution 20 can be reduced. Degassing promotion mechanism 103 reduces the amount of dissolved oxygen contained in solution 20 by reducing the pressure of the gas in contact with solution 20. Thereby, the oxidative action of dissolved oxygen in solution 20 is reduced, and a state with an increased proportion of divalent iron ions in solution 20 is well maintained.

Instead of reducing the pressure of the gas in contact with solution 20, degassing promotion mechanism 103 may blow in a gas other than oxygen so that the partial pressure of oxygen in the gas can be reduced. An example of the gas is nitrogen.

[Second Embodiment]

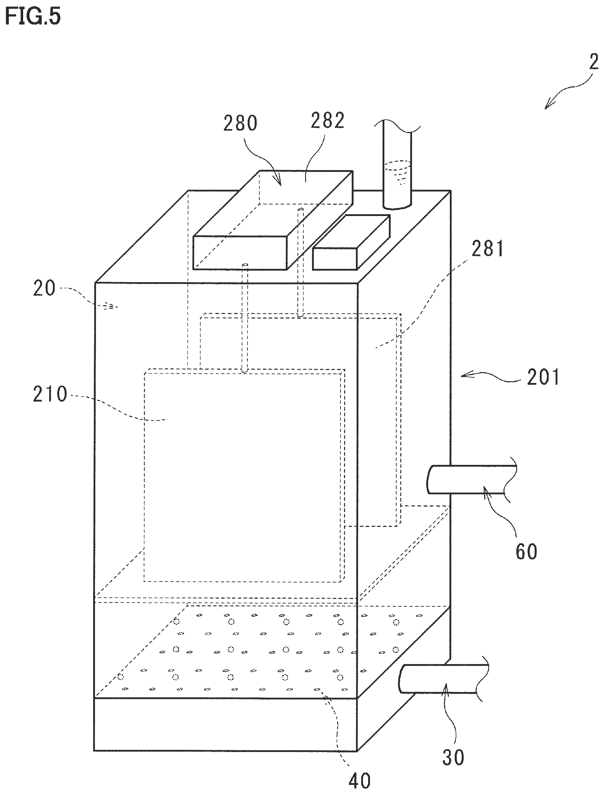

A carbon dioxide capture module 201 in Fig. 5 includes: a carbon dioxide capture material 210; solution 20 in contact with carbon dioxide capture material 210 to cover carbon dioxide capture material 210; and supply unit 30 that supplies carbon dioxide to solution 20. As illustrated in Fig. 5, capture module 201 is disposed in a carbon dioxide capture device 2.

Capture module 201 is capable of bringing solution 20 with carbon dioxide dissolved therein into sufficient contact with capture material 210 to cover capture material 210. Part of the dissolved carbon dioxide changes into carbonate ions or the like. Capture material 210 can capture carbonate ions or the like dissolved in solution 20 with ease. With the sufficient contact of solution 20 with capture material 210, the denaturation of capture material 210 because of oxidation or the like is well prevented. Including a voltage application mechanism 280 described later, capture module 201 can promote the elution of ions from capture material 210 and at the same time control the electric potential of capture material 210 with ease. Accordingly, capture module 201 is superior in capture efficiency for carbon dioxide.

<Carbon Dioxide Capture Module>

Capture module 201 captures carbonate ions or the like generated in solution 20 with capture material 10 by bringing solution 20 with carbon dioxide dissolved therein into sufficient contact with capture material 210 to cover capture material 210. Capture module 201 includes: dissolution promotion mechanism 40 that promotes the dissolution of carbon dioxide in solution 20; solution adjustment mechanism 60 that supplies at least one of an acidic substance, a reducing agent, a sequestering agent, and a builder to solution 20; display mechanism 90 that displays reduction in the activity of capture material 10; and voltage application mechanism 280 that applies a voltage to capture material 210. In the present embodiment, solution 20, supply unit 30, dissolution promotion mechanism 40, solution adjustment mechanism 60, and display mechanism 90 can be the same as those in the first embodiment. Capture device 2 can be the same as that in the first embodiment except capture module 201. The following describes capture material 210 and voltage application mechanism 280.

(Carbon Dioxide Capture Material)

Capture material 210 is a plate-like member containing iron or iron alloy as a main constituent. The iron or iron alloy can be the same as that in the first embodiment, and hence description is omitted.

(Voltage Application Mechanism)

Voltage application mechanism 280 includes: a plate-like counter electrode 281 facing a plate surface of capture material 210; and a voltage application unit 282 connected to capture material 210 and counter electrode 281. Capture material 210 and counter electrode 281 are disposed apart from each other. An example of the material of counter electrode 281 is platinum. Voltage application unit 282 and each of capture material 210 and counter electrode 281 are connected together with an insulation-coated lead wire or the like. For example, application of a positive voltage to capture material 210 by voltage application mechanism 280 promotes the elution of divalent iron ions from capture material 210 to solution 20.

The direction and magnitude of a voltage to be applied to capture material 210 by voltage application mechanism 280 are appropriately set according to the pH of solution 20. The direction and magnitude of the voltage may be controlled so that the electric potential of capture material 210 can satisfy formula (3) to formula (5), or formula (6) and formula (7).

Voltage application mechanism 280 may be controlled so that iron ions contained in solution 20 can be reduced (cathodic reduction) on the side of one of capture material 210 and counter electrode 281 with application of a negative electrode. Thereby, the amount of divalent iron ions contained in solution 20 can be increased with reduction in the amount of trivalent iron ions contained in solution 20.

[Third Embodiment]

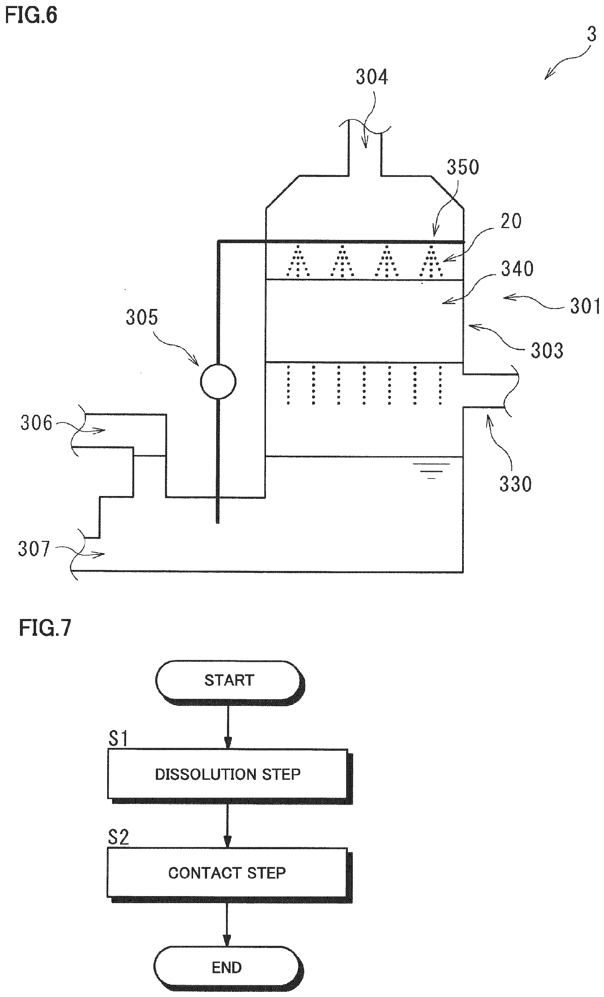

A carbon dioxide capture module 301 in Fig. 6 includes: carbon dioxide capture materials; solution 20 in contact with the carbon dioxide capture materials to cover the carbon dioxide capture materials; and a supply unit 330 that supplies carbon dioxide to solution 20. In Fig. 6, capture module 301 is disposed in a carbon-dioxide-capturing scrubber 3.

Capture module 301 is capable of bringing solution 20 with carbon dioxide dissolved therein into sufficient contact with the capture materials to cover the capture materials. Part of the dissolved carbon dioxide changes into carbonate ions or the like. Accordingly, the capture materials can capture carbonate ions or the like dissolved in solution 20 with ease. With the sufficient contact of solution 20 with the capture materials, the denaturation of the capture materials because of oxidation or the like is well prevented. Accordingly, capture module 301 is superior in capture efficiency for carbon dioxide.

The sizes of capture module 301 and capturing scrubber 3 are appropriately set to fit the place and purpose of use. The following describes capture module 301 and capturing scrubber 3 including capture module 301 in detail.

<Carbon Dioxide Capture Module>

Capture module 301 captures carbonate ions or the like generated in solution 20 with the capture materials by bringing solution 20 with carbon dioxide dissolved therein into contact with the capture materials to cover the capture materials. Capture module 301 includes a plurality of capture materials. Capture module 301 includes: an accommodation unit 340 that accommodates the plurality of capture materials; and a sprinkle mechanism 350 that sprinkles solution 20 to the plurality of capture materials.

The capture materials, solution 20, and supply unit 330 of capture module 301 are disposed in a container. The capture materials are disposed in the container in a state in which they are accommodated in accommodation unit 340, solution 20 is sprinkled in the container by sprinkle mechanism 350, and supply unit 330 is provided in such a manner that supply unit 330 can supply carbon dioxide into the container. An example of the container is a housing 303 described later.

(Carbon Dioxide Capture Materials)

For the capture materials in capture module 301, the same configuration as capture materials 10 in the first embodiment can be used. As with the case of capture materials 10 in the first embodiment, the capture materials in capture module 301 may be disposed on supports 71a, 71b, or 71c. As in the first embodiment, capture module 301 may include a plurality of supports 71a, 71b, or 71c. The plurality of supports 71a, 71b, or 71c may be disposed apart from each other, and in this case a spacer may be disposed between each two of supports 71a, 71b, or 71c as in the first embodiment. In capture module 301, the plurality of capture materials, the plurality of supports, and the spacers as a whole constitute a carbon dioxide capture unit.

(Solution)

Solution 20 is sprinkled by sprinkle mechanism 350 to come into contact with the plurality of capture materials to continuously cover the plurality of capture materials. For solution 20 in capture module 301, the same configuration as solution 20 in the first embodiment can be used. Accordingly, solution 20 may contain a dissolution promoter that promotes the dissolution of carbon dioxide in solution 20, may contain a pH-buffering agent, may contain a salt that exhibits acidity in solution 20, and may contain a carbonation promoter to promote the carbonation of iron ions eluted form the capture materials.

(Accommodation Unit)

Accommodation unit 340 is a container that accommodates the plurality of capture materials. Accommodation unit 340 accommodates the entire capture unit. Accommodation unit 340 has a plurality of openings through which solution 20 passes. Accommodation unit 340 has a plurality of openings each of which serves as a flow channel for solution 20 sprinkled from above by sprinkle mechanism 350 to come into contact with the plurality of capture materials to cover the plurality of capture materials, pass through the plurality of capture materials, and flow out from below. The configuration in which capture module 301 includes accommodation unit 340 well allows solution 20 to be supplied to homogenously come into contact with the plurality of capture materials accommodated at specific positions.

(Sprinkle Mechanism)

Sprinkle mechanism 350 is disposed above accommodation unit 340. Sprinkle mechanism 350 sprinkles solution 20 to accommodation unit 340 from above. Sprinkle mechanism 350 is provided so that solution 20 can be homogenously sprinkled to accommodation unit 340. Capture module 301 well achieves enhanced capture efficiency for carbon dioxide by homogenously bringing solution 20 into contact with the plurality of capture materials by means of sprinkle mechanism 350. Solution 20 sprinkled by sprinkle mechanism 350, which is in a state of droplets of large surface area, comes into contact with carbon dioxide supplied from supply unit 330 and moving to a degassing promotion mechanism 304 described later. Accordingly, more enhanced capture efficiency for carbon dioxide is well achieved. In addition, capture module 301 does not allow solution 20 sprinkled by sprinkle mechanism 350 to remain in accommodation unit 340. Accordingly, solution 20 is well controlled to have a proper pH.

(Supply Unit)

Supply unit 330 supplies a gas containing carbon dioxide to accommodation unit 340. In Fig. 6, supply unit 330 is provided so that it can supply a gas containing carbon dioxide to accommodation unit 340 from below. Capture module 301 includes a flow channel in which solution 20 sprinkled by sprinkle mechanism 350 passes through accommodation unit 340 and falls below. Supply unit 330 supplies a gas containing carbon dioxide into that flow channel from below accommodation unit 340. Supply unit 330 is provided so that carbon dioxide supplied into the flow channel can dissolve in solution 20 within accommodation unit 340. Supply unit 330 may be provided so that the inside of the flow channel can be filled with carbon dioxide.

Supply unit 330 exhales a gas containing carbon dioxide into the flow channel. The lower limit of the partial pressure of carbon dioxide in the gas to be supplied from supply unit 330 may be 0.005 MPa or 0.010 MPa for homogeneously dissolving carbon dioxide in solution 20 sprinkled by sprinkle mechanism 350. The upper limit of the partial pressure can be, for example, 0.99 MPa for the handleability of capture module 301. The partial pressure may be 0.005 MPa or more and 0.99 MPa or less or 0.010 MPa or more and 0.99 MPa or less.

<Carbon-dioxide-capturing Scrubber>

Capturing scrubber 3 is a wet scrubber. Capturing scrubber 3 includes capture module 301, and sprinkles solution 20 to the capture materials. Capturing scrubber 3 includes: housing 303 in which capture module 301 is disposed; degassing promotion mechanism 304 that discharges a gas in housing 303; and a pump 305 that circulates solution 20 that has flowed out of accommodation unit 340 to sprinkle mechanism 350.

Including capture module 301, capturing scrubber 3 is superior in capture efficiency for carbon dioxide.

(Housing)

Housing 303 has a tube-like part that vertically extends and a storage part disposed below the tube-like part. The tube-like part is, for example, cylindrical. In an upper part of the tube-like part, sprinkle mechanism 350 is disposed. On the side below sprinkle mechanism 350 in the tube-like part, accommodation unit 340 is disposed. Accommodation unit 340 is provided to block the inner space of the tube-like part at a part in the axial direction of the tube-like part. To a peripheral wall below accommodation unit 340 in the tube-like part, supply unit 330 is connected. The region on the side below sprinkle mechanism 350 in the inner space of the tube-like part constitutes a flow channel for solution 20.

The storage part is provided at the lower end of the tube-like part in a continuous manner. The storage part stores solution 20 that has been sprinkled by sprinkle mechanism 350 and passed through accommodation unit 340. Solution 20 to be stored in the storage part may contain carbon dioxide dissolved therein.

To the storage part, a solution supply mechanism 306 and a solution discharge mechanism 307 are connected. Solution supply mechanism 306 and solution discharge mechanism 307 may supply solution 20 to the storage part or discharge solution 20 stored in the storage part in order to regulate the pH of solution 20 stored in the storage part. Solution supply mechanism 306 may be provided as a solution adjustment mechanism. A display mechanism may be provided to the storage part.

(Degassing Promotion Mechanism)

Degassing promotion mechanism 304 is disposed above accommodation unit 340. For example, degassing promotion mechanism 304 is disposed at the top of the tube-like part. The function of degassing promotion mechanism 304 can be the same as that of degassing promotion mechanism 103 in the first embodiment, and hence description is omitted.

(Pump)

Pump 305 pumps up solution 20 stored in the storage part and circulates it to sprinkle mechanism 350.

[Fourth Embodiment]

[Carbon Dioxide Capture Method]

A carbon dioxide capture method in Fig. 7 includes bringing a carbonate ion or a hydrogen carbonate ion into contact with a carbon dioxide capture material covered by a solution (hereinafter, also referred to as "contact step S2"). The carbon dioxide capture method includes dissolving carbon dioxide in a solution (hereinafter, also referred to as "dissolution step S1").

Because the solution comes into sufficient contact with the capture material to cover the capture material in the carbon dioxide capture method, the capture material can capture carbonate ions or the like dissolved in the solution with ease. With the sufficient contact of the solution with the capture material, the denaturation of the capture material because of oxidation or the like is well prevented. Accordingly, the carbon dioxide capture method is superior in capture efficiency for carbon dioxide.

The carbon dioxide capture method can be performed with capture module 101, capture module 201, or capture module 301. The following describes the carbon dioxide capture method in detail.

(Dissolution Step)

Dissolution step S1 is performed by supplying a gas containing carbon dioxide from supply unit 30 of capture module 101 or 201 to solution 20. Alternatively, dissolution step S1 is performed by supplying a gas containing carbon dioxide from supply unit 330 to solution 20 sprinkled by sprinkle mechanism 350 of capture module 301.

The dissolution of carbon dioxide in solution 20 may be promoted with dissolution promotion mechanism 40 in dissolution step S1. A plurality of capture materials may be dispersed in solution 20 with dispersion mechanism 50 in dissolution step S1. In dissolution step S1, at least one of an acidic substance, a reducing agent, a sequestering agent, and a builder may be supplied to solution 20 with solution adjustment mechanism 60, and reduction in the activity of the capture material may be displayed with display mechanism 90. Solution 20 may contain carbonation promoter 21. In the case that capture module 201 described for the second embodiment is used, a positive voltage may be applied to capture material 210.

(Contact Step)

In contact step S2, the capture material is allowed to capture carbonate ions or the like by bringing carbonate ions or the like into contact with the capture material. More specifically, the capture material is allowed to capture carbonate ions or the like by bonding divalent iron ions eluted from the capture material and carbonate ions or the like together. In contact step S2, carbonate ions or the like generated in solution 20 are brought into contact with capture materials 10 soaked in solution 20. Alternatively, in contact step S2, carbonate ions or the like are brought into contact with the plurality of capture materials 10 by allowing solution 20 containing carbonate ions or the like to pass through accommodation unit 340 of capture module 301.

In the carbon dioxide capture method, dissolution step S1 and contact step S2 are performed in this order as a procedure to allow one capture material to capture carbonate ions or the like. Dissolution step S1 and contact step S2 can be performed in parallel through the whole of capture module 101, 201, or 301. In this case, the dissolution rate of carbon dioxide in solution 20 may be equal to or lower than the carbonation rate of capture materials 10.

The carbon dioxide capture method may include recovering the capture material that has captured carbonate ions or the like after contact step S2 (also referred to as "recovery step").

[Other Embodiments]

The presently disclosed modes of implementation are examples in all aspects, and should not be interpreted as limitations. The scope of the present invention is not limited to the configurations of the above embodiments, and intended to include all modifications within the meaning and scope that are shown in claims and equivalent to the claims.

The capture module may be disposed in a device other than the capture device and capturing scrubber described for the above embodiments.

The manner to dispose capture materials is not limited to the configurations described for the above embodiments. For example, capture materials do not need to be disposed on a support. Capture materials, which have been disposed on a porous particle, may be further disposed on another support.

Although capture materials are particulate or plate-like in the above embodiments, the configuration of the present disclosure is not limited thereto. For example, capture materials in the form of a mass are acceptable, and in this case, to facilitate handling, the capture materials may have such a size that the capture materials can be accommodated in a 30-cm square.

The solution may contain an emulsifying agent (surfactant). Under the configuration in which the solution contains an emulsifying agent, the emulsifying agent is adsorbed on capture materials to form micelles, and as a result the capture materials can be prevented from aggregating and at the same time proper particle sizes for the capture materials can be maintained with ease.

The lower limit of the HLB value of the emulsifying agent may be 4 or 6 for sufficiently preventing capture materials from aggregating. The upper limit of the HLB value of the emulsifying agent is not limited, and can be, for example, 20. The HLB value of the emulsifying agent may be 4 or more and 20 or less or 6 or more and 20 or less.

The lower limit of the absolute value of the zeta potential of micelles formed by the emulsifying agent may be 20 mV or 25 mV for keeping the stability of the micelles. The upper limit of the absolute value of the zeta potential of the micelles is not limited, and can be, for example, 40 mV. The absolute value of the zeta potential of the micelles may be 20 mV or more and 40 mV or less or 25 mV or more and 40 mV or less.

Although water is used as the solvent of the solution in the above embodiments, the present disclosure is not limited thereto. For example, an organic solvent may be used as the solvent.

One or both of the dissolution promotion mechanism and the dispersion mechanism can be omitted if carbon dioxide can be properly captured with a capture material. A configuration in which the solution lacks one or both of the dissolution promoter and the pH-buffering agent is also acceptable. The capture module does not need to include the display mechanism and the solution adjustment mechanism, for example, if reduction in the activity of capture materials can be prevented or if reduction in the activity can be predicted.

Although the carbonation promoters used in the above embodiments are particulate, the carbonation promoters are not limited to particulate ones. For example, the carbonation promoters may be sludge or solution containing iron carbonate or the like. The carbonation promoters may be each a particle or porous material whose crystal structure is similar to that of iron carbonate or the like.

Although the case that the carbonation promoters are disposed separately from the capture materials with the porous membrane intervening therebetween has been described for the above embodiments, the carbonation promoters may be disposed, for example, on a support apart from capture materials. In the case that the capture module has a plurality of supports, the capture module may have a support on which only carbonation promoters are disposed and a support on which only capture materials are disposed.

EXAMPLES

Hereinafter, the present disclosure will be more specifically described with examples, but the present disclosure is not limited by the following examples.

[No. 1]

A device including a carbon dioxide capture module was produced in the following procedure, and $CO_2$ gas was injected into the device.

Activated carbon was removed from an activated carbon cartridge of a bubbling device (manufactured by Suisaku Co., Ltd., product name: Suisaku Eight S) to make a space, and 20 g of a powdery carbon dioxide capture material wrapped with a nonwoven fabric was accommodated in the space. The carbon dioxide capture material used was highly compressible atomized pure iron powder (manufactured by Kobe Steel, Ltd., product number: Atomel (R) 300M). The average particle size of the carbon dioxide capture material was 80 $\mu$m. Thereafter, the bubbling device was disposed in a water tank (width: 100 mm, length: 100 mm, height: 150 mm). The water tank was disposed in a reaction vessel in the shape of a cube.

A solution was supplied to the water tank to completely soak the bubbling device. The solution was distilled water. An air pump (manufactured by AS ONE Corporation, product number: SA-1200S) was connected to the bubbling device. A $CO_2$ sensor (manufactured by NEW COSMOS ELECTRIC CO., LTD., product number: XP-3340II) was disposed in the reaction vessel for continuous monitoring of $CO_2$ concentration. $CO_2$ gas was injected into the reaction vessel, and the injection of $CO_2$ gas was stopped when the $CO_2$ concentration reached 95 vol%. That is, a mixed atmosphere of 95 vol% $CO_2$ and 5 vol% air was formed in the reaction vessel. The reaction vessel was left to stand as it was for a certain period of time.

[No. 2]

A device was produced with the same procedure as for No. 1 except that no carbon dioxide capture material was accommodated in the bubbling device, and $CO_2$ gas was injected.

[No. 3]

A device was produced with the same procedure as for No. 1 except that citric acid was added to the distilled water to give a citric acid content of 0.2% by mass, and $CO_2$ gas was injected.

[No. 4]

A device was produced with the same procedure as for No. 1 except that no carbon dioxide capture material was accommodated in the bubbling device and citric acid was added to the distilled water to give a citric acid content of 0.2% by mass, and $CO_2$ gas was injected.

[No. 5]

A device was produced with the same procedure as for No. 1 except that citric acid was added to the distilled water to give a citric acid content of 2.0% by mass, and $CO_2$ gas was injected.

[No. 6]

A device was produced with the same procedure as for No. 1 except that citric acid was added to the distilled water to give a citric acid content of 10.0% by mass, and $CO_2$ gas was injected.

[No. 7]

A device was produced with the same procedure as for No. 1 except that citric acid was added to the distilled water to give a citric acid content of 30.0% by mass, and $CO_2$ gas was injected.

[No. 8]

For No. 8, the device of No. 6 after the $CO_2$ content as measured with the $CO_2$ sensor in the reaction vessel reached 0 vol% was used. In the device, no iron powder remained in the solution, and 20 g of the same carbon oxide capture material (iron powder) as for No. 1 was added to the bubbling device, and $CO_2$ gas was injected with the same procedure as for No. 1.

[No. 9]

For No. 9, the device of No. 8 after the $CO_2$ content as measured with the $CO_2$ sensor in the reaction vessel reached 0 vol% was used. In the device, no iron powder remained in the solution, and 20 g of the same carbon oxide capture material (iron powder) as for No. 1 was added to the bubbling device, and $CO_2$ gas was injected with the same procedure as for No. 1.

[No. 10]

A device was produced with the same procedure as for No. 5 except that a mixed atmosphere of 60 vol% $CO_2$ and 40 vol% air was formed in the reaction vessel, and $CO_2$ gas was injected.

[No. 11]

A device was produced with the same procedure as for No. 5 except that a mixed atmosphere of 15 vol% $CO_2$ and 85 vol% air was formed in the reaction vessel, and $CO_2$ gas was injected.

[Evaluation]

For each of the devices of No. 1 to No. 11, the ratio of the reduction [g] of $CO_2$ to the mass [kg] of the carbon dioxide capture material was calculated as "$CO_2$ capture efficiency". The $CO_2$ capture efficiencies of the devices of No. 1 to No. 11. are shown in Table 1. The pH and oxygen content of solution in the devices are shown in Table 1. The value of pH of the solution of No. 9 is a value at the end of experiment (i.e., when the $CO_2$ concentration reached 0 vol%), and the other values of pH are values at the start of experiment. In Table 1, each cell with "-" indicates the absence of data. "-" in the columns for $CO_2$ capture efficiency indicates that the $CO_2$ concentration had already reached 0 vol% at that time. The electric potential (V vs. SHE) of the carbon dioxide capture material (iron powder) in the solution in each device was estimated to be 0.0 V to 0.4 V.

[Table 1]

| | Presence or absence of iron powder | pH of solution | Oxygen content [vol%] | $CO_2$ capture efficiency [g/kg] after 200 minutes | $CO_2$ capture efficiency [g/kg] after 1000 minutes | $CO_2$ capture efficiency [g/kg] after 2000 minutes |
|---|---|---|---|---|---|---|
| No. 1 | presence | 3.8-4.1 | 1.05 | 40 | 120 | 190 |
| No. 2 | absence | 3.8-4.1 | 1.05 | 40 | 60 | 75 |
| No. 3 | presence | 2.8 | 1.05 | 60 | 200 | - |
| No. 4 | absence | 2.8 | 1.05 | 0 | 0 | 5 |
| No. 5 | presence | 2.2 | 1.05 | 140 | 620 | - |
| No. 6 | presence | 1.8 | 1.05 | 500 | - | - |
| No. 7 | presence | 1.4 | 1.05 | 660 | - | - |
| No. 8 | presence | - | 1.05 | 460 | - | - |
| No. 9 | presence | 2.7 | 1.05 | 360 | - | - |
| No. 10 | presence | 2.2 | 8.40 | 140 | - | - |
| No. 11 | presence | 2.2 | 17.85 | 280 | - | - |

The $CO_2$ capture efficiency of No. 1, which had the carbon dioxide capture material (iron powder), was comparable to that of No. 2, which had no carbon dioxide capture material, after the lapse of 200 minutes, but No. 1 came to exhibit higher $CO_2$ capture efficiency than No. 2 as time passed. The $CO_2$ capture efficiency of No. 1 was always higher than that of No. 4, which had no carbon dioxide capture material.

Comparison of No. 1, No. 3, and No. 5 to No. 7 found that the lower the pH of the solution, the higher the $CO_2$ capture efficiency. The $CO_2$ capture efficiency of No. 7, in which the pH of the solution was 1.4, was expected to be 16.5 times higher than that of No. 1, in which the pH of the solution was 3.8 to 4.1.

Comparison of No. 6, No. 8, and No. 9 suggested that the value of pH could increase through the consumption of the iron powder in the solution, and that this could result in reduction in $CO_2$ capture efficiency. However, No. 9 kept a still high $CO_2$ capture efficiency, and exhibited about 70% of the $CO_2$ capture efficiency of No. 6.

It was shown by No. 5, No. 10, and No. 11 that if the pH of the solution was less than 3.0, the $CO_2$ capture efficiency could be maintained even when the oxygen concentration of the gas in contact with the solution was high. This is probably because divalent iron ions are well stabilized in the solution when the pH of the solution is low.

These results demonstrated that high $CO_2$ capture efficiency is exhibited with the configuration in which the carbon dioxide capture material is in contact with the solution to be covered by the solution, that higher $CO_2$ capture efficiency can be achieved by adjusting the pH of the solution, and that the $CO_2$ capture efficiency can be maintained even in a common industrial facility, residential space, or the like, in which exposure to oxygen is likely to be caused.

REFERENCE SIGNS LIST

1, 2 Carbon dioxide capture device
3 Carbon-dioxide-capturing scrubber
10, 210 Carbon dioxide capture material
20 Solution
21 Carbonation promoter
30, 330 Supply unit
40 Dissolution promotion mechanism
50 Dispersion mechanism (ultrasonic generator)
60 Solution adjustment mechanism
70 Carbon dioxide capture unit
71a, 71b, 71c Support
72 Spacer
90 Display mechanism (pH indicator or pH meter)
280 Voltage application mechanism
281 Counter electrode
282 Voltage application unit
101, 201, 301 Carbon dioxide capture module
102 Storage tank
102a Porous membrane
103, 304 Degassing promotion mechanism
303 Housing
305 Pump
306 Solution supply mechanism
307 Solution discharge mechanism
340 Accommodation unit
350 Sprinkle mechanism

**Claims**

1. A carbon dioxide capture module comprising:

    a carbon dioxide capture material;
    a solution in contact with the carbon dioxide capture material to cover the carbon dioxide capture material; and
    a supply unit that supplies carbon dioxide to the solution, wherein
    the carbon dioxide capture material contains iron or an iron compound as a main constituent.

2. The carbon dioxide capture module according to claim 1, wherein pH of the solution and electric potential of the carbon dioxide capture material are controlled to fall within a range in which a divalent iron ion or divalent iron hydroxide is stable in an electric potential-pH diagram.

3. The carbon dioxide capture module according to claim 1 or 2, wherein the solution contains a pH-buffering agent.

4. The carbon dioxide capture module according to any one of claims 1 to 3, comprising a solution adjustment mechanism that supplies at least one of an acidic substance, a reducing agent, a sequestering agent, and a builder to the solution.

5. The carbon dioxide capture module according to any one of claims 1 to 4, comprising a voltage application mechanism that applies a voltage to the carbon dioxide capture material.

6. The carbon dioxide capture module according to any one of claims 1 to 5, comprising a degassing promotion mechanism that promotes degassing to remove dissolved oxygen in the solution.

7. The carbon dioxide capture module according to any one of claims 1 to 6, wherein the solution contains a carbonation promoter that promotes carbonation of iron ions eluted from the carbon dioxide capture material.

8. The carbon dioxide capture module according to any one of claims 1 to 7, comprising a dissolution promotion mechanism that promotes dissolution of the carbon dioxide in the solution.

9. The carbon dioxide capture module according to any one of claims 1 to 8, wherein the solution contains a dissolution promoter that promotes dissolution of the carbon dioxide in the solution.

10. The carbon dioxide capture module according to any one of claims 1 to 9, wherein a dissolution rate of the carbon dioxide in the solution is equal to or lower than a carbonation rate of the carbon dioxide capture material.

11. The carbon dioxide capture module according to any one of claims 1 to 10, wherein the carbon dioxide capture material includes a plurality of carbon dioxide capture materials, and
the plurality of carbon dioxide capture materials has an average particle size of 5 nm or more and 500 $\mu$m or less.

12. The carbon dioxide capture module according to claim 11, comprising a dispersion mechanism that disperses the plurality of carbon dioxide capture materials in the solution, wherein
the dispersion mechanism allows the plurality of carbon dioxide capture materials to keep an average particle size of 5 nm or more and 500 $\mu$m or less.

13. The carbon dioxide capture module according to any one of claims 1 to 12, comprising a display mechanism that displays reduction in activity of the carbon dioxide capture material when the activity of the carbon dioxide capture material has decreased.

14. The carbon dioxide capture module according to any one of claims 1 to 13, wherein the carbon dioxide capture material includes a plurality of carbon dioxide capture materials, and
the carbon dioxide capture module comprises a sprinkle mechanism that sprinkles the solution to the plurality of carbon dioxide capture materials.

15. The carbon dioxide capture module according to claim 14, comprising an accommodation unit that accommodates the plurality of carbon dioxide capture materials.

16. The carbon dioxide capture module according to any one of claims 1 to 15, comprising a porous support on which the carbon dioxide capture material is disposed.

17. The carbon dioxide capture module according to claim 16, wherein

the support is a porous particle, and
the porous particle in a state in which the carbon dioxide capture material is disposed on the porous particle has an average particle size of 10 mm or less.

18. The carbon dioxide capture module according to claim 16, wherein

the support is a porous thread or a porous sheet, and
the carbon dioxide capture material includes a plurality of carbon dioxide capture materials disposed on the support.

**19.** The carbon dioxide capture module according to any one of claims 16 to 18, wherein the support includes a plurality of supports, and
the plurality of supports is disposed apart from each other.

**20.** A carbon-dioxide-capturing scrubber comprising:

the carbon dioxide capture module according to any one of claims 1 to 19, wherein
the carbon-dioxide-capturing scrubber sprinkles the solution to the carbon dioxide capture material.

**21.** A carbon dioxide capture device comprising:

the carbon dioxide capture module according to any one of claims 1 to 19; and
a storage tank in which the solution is stored, wherein
the carbon dioxide capture material is soaked in the solution.

**22.** A carbon dioxide capture method comprising bringing a carbonate ion or a hydrogen carbonate ion into contact with a carbon dioxide capture material covered by a solution, wherein the carbon dioxide capture material contains iron or an iron compound as a main constituent.

FIG.1

FIG.2

FIG.3

71b

10

FIG.4

10

71c

FIG.5

FIG.6

FIG.7

START

S1 DISSOLUTION STEP

S2 CONTACT STEP

END

## INTERNATIONAL SEARCH REPORT

| International application No. |
|---|
| **PCT/JP2023/037601** |

**A.    CLASSIFICATION OF SUBJECT MATTER**

***B01D 53/14***(2006.01)i; ***B01D 53/18***(2006.01)i; ***C01B 32/50***(2017.01)i
FI:    B01D53/14 200; B01D53/14 100; B01D53/18; C01B32/50

According to International Patent Classification (IPC) or to both national classification and IPC

**B.    FIELDS SEARCHED**

Minimum documentation searched (classification system followed by classification symbols)

B01D53/14; B01D53/18; C01B32/50

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | US 2020/0246746 A1 (THE FLORIDA INTERNATIONAL UNIVERSITY BOARD OF TRUSTEES) 06 August 2020 (2020-08-06) claims, paragraphs [0027], [0046], [0096], examples 1, 5, 6, fig. 2 | 1, 8, 11-12, 21-22 |
| Y | | 3-6, 8-12, 14-16, 19-21 |
| A | | 2, 7, 13, 17-18 |
| X | JP 2007-75773 A (NATIONAL INSTITUTE FOR MATERIALS SCIENCE) 29 March 2007 (2007-03-29) in particular, paragraphs [0011], [0024], [0028], example 1, fig. 1 | 1, 6, 11-12, 21-22 |
| Y | | 3-6, 8-12, 14-16, 19-21 |
| A | | 2, 7, 13, 17-18 |
| X | JP 46-8667 B1 (HIRAKAWA TEKKOSHO KK) 04 March 1971 (1971-03-04) in particular, claims, p. 1, column 1, line 16 from the bottom to column 2, line 26, drawings | 1, 6, 9, 14-16, 19-20, 22 |
| Y | | 3-6, 8-12, 14-16, 19-21 |
| A | | 2, 7, 13, 17-18 |

✓ Further documents are listed in the continuation of Box C.        ✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 December 2023** | **09 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| | International application No. |
|---|---|
| | **PCT/JP2023/037601** |

### C. DOCUMENTS CONSIDERED TO BE RELEVANT

| Category* | Citation of document, with indication, where appropriate, of the relevant passages | Relevant to claim No. |
|---|---|---|
| Y | JP 2007-31169 A (NATIONAL INSTITUTE FOR MATERIALS SCIENCE) 08 February 2007 (2007-02-08)<br>in particular, claims, paragraphs [0018]-[0020], example 1 | 3-6, 8-12, 14-16, 19-21 |
| A | | 1, 7, 13, 17-18, 22 |
| A | JP 2022-102786 A (UNIV TOHOKU) 07 July 2022 (2022-07-07) | 4 |
| Y | JP 2012-50905 A (IHI CORP) 15 March 2012 (2012-03-15)<br>in particular, paragraph [0022] | 5-6, 8-12, 14-16, 19-21 |
| A | JP 50-47878 A (MERKL, George G.) 28 April 1975 (1975-04-28) | 1-22 |
| A | JP 2012-76065 A (IHI CORP) 19 April 2012 (2012-04-19)<br>in particular, claim 5 | 14, 20 |
| A | JP 11-99330 A (TOSHIBA CORP) 13 April 1999 (1999-04-13) | 17 |
| A | JP 2018-21217 A (FUJITSU LTD) 08 February 2018 (2018-02-08) | 2, 5 |
| A | JP 53-47365 A (MITSUBISHI HEAVY IND LTD) 27 April 1978 (1978-04-27) | 2, 5 |
| A | JP 2012-504047 A (AKERMIN, INC.) 16 February 2012 (2012-02-16)<br>in particular, claim 39 | 1, 22 |
| A | JP 2021-122787 A (FUJITA CORP) 30 August 2021 (2021-08-30) | 8 |
| P, A | JP 7248202 B1 (SUMITOMO ELECTRIC INDUSTRIES, LTD.) 29 March 2023 (2023-03-29) | 16-19 |

Form PCT/ISA/210 (second sheet) (January 2015)

## INTERNATIONAL SEARCH REPORT
Information on patent family members

International application No.

**PCT/JP2023/037601**

| Patent document cited in search report | | | Publication date (day/month/year) | Patent family member(s) | | | Publication date (day/month/year) |
|---|---|---|---|---|---|---|---|
| US | 2020/0246746 | A1 | 06 August 2020 | (Family: none) | | | |
| JP | 2007-75773 | A | 29 March 2007 | (Family: none) | | | |
| JP | 46-8667 | B1 | 04 March 1971 | (Family: none) | | | |
| JP | 2007-31169 | A | 08 February 2007 | (Family: none) | | | |
| JP | 2022-102786 | A | 07 July 2022 | WO | 2022/138149 | A1 | |
| JP | 2012-50905 | A | 15 March 2012 | US | 2013/0180400 | A1 | |
| | | | | in particular, paragraph [0023] | | | |
| | | | | GB | 2499134 | A | |
| | | | | WO | 2012/029757 | A1 | |
| | | | | CA | 2809350 | A1 | |
| JP | 50-47878 | A | 28 April 1975 | GB | 1555501 | A | |
| | | | | FR | 2223313 | A | |
| JP | 2012-76065 | A | 19 April 2012 | (Family: none) | | | |
| JP | 11-99330 | A | 13 April 1999 | US | 2001/0001782 | A1 | |
| JP | 2018-21217 | A | 08 February 2018 | US | 2018/0030604 | A1 | |
| JP | 53-47365 | A | 27 April 1978 | (Family: none) | | | |
| JP | 2012-504047 | A | 16 February 2012 | US | 2010/0086983 | A1 | |
| | | | | US | 2011/0300623 | A1 | |
| | | | | US | 2012/0220025 | A1 | |
| | | | | US | 2015/0010453 | A1 | |
| | | | | WO | 2010/037109 | A2 | |
| | | | | CA | 2738358 | A1 | |
| | | | | CN | 102232004 | A | |
| | | | | KR | 10-2011-0087273 | A | |
| JP | 2021-122787 | A | 30 August 2021 | (Family: none) | | | |
| JP | 7248202 | B1 | 29 March 2023 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022166997 A
- JP 2007031169 A
- JP 2007075773 A